# FASCICULE DE BREVET EUROPEEN

(11) **EP 0 402 198 B1**
(45) Date de publication et mention de la délivrance du brevet: **11.08.1993**
(21) Numéro de dépôt: 90401439.6
(22) Date de dépôt: 30.05.1990
(51) Int. Cl.: F16B 39/08

(54) **Ensemble d'écrou à verrouillage**
Verriegelungsmutter
Locking-nut assembly

(30) Priorité: 06.06.1989 FR 8907459
(43) Date de publication de la demande: 12.12.1990
(73) Titulaire: SHUR-LOK INTERNATIONAL S.A., B-4822 Petit-Rechain (BE)
(72) Inventeur: Bruyère, René, B-4512 Blegny (BE)
(74) Mandataire: Jacobson, Claude

(56) Documents cités:
- DE-A- 1 962 186
- FR-A- 2 090 742
- US-A- 2 365 433

## Description

La présente invention concerne les ensembles d'écrou à verrouillage destinés à être immobilisés dans une certaine position après avoir été vissés sur une tige filetée, et plus particulièrement un ensemble d'écrou à verrouillage du type comprenant un écrou muni de reliefs de transmission de couple pour son vissage sur une tige filetée présentant des premiers moyens de verrouillage , cet écrou présentant sur sa surface périphérique des cannelures externes à faible pas, et une seconde pièce tubulaire présentant des cannelures internes adaptées pour coopérer avec les cannelures de l'écrou et munie de seconds moyens de verrouillage adaptés pour coopérer avec lesdits premiers moyens de verrouillage pour verrouiller en rotation l'ensemble d'écrou par rapport à la tige filetée.

On connait de nombreux types d'ensembles d'écrou à verrouillage dont le plus courant comporte un écrou qui sur l'une de ses faces d'extrémité est pourvu de créneaux diamétralement opposés constituant des moyens de verrouillage.

Cet écrou est destiné à être vissé sur une tige filetée pourvue d'un trou radial traversant, constituant également des moyens de verrouillage.

Deux des créneaux de l'écrou doivent être disposés en regard du trou de la tige et une goupille est ensuite introduite dans le trou de manière à être logée dans les deux créneaux afin de verrouiller l'écrou.

L'un des inconvénients des ensembles connus réside dans le fait que le serrage correct de l'écrou est tributaire de la venue en position favorable de deux des créneaux diamétralement opposés de l'écrou par rapport au trou de la tige filetée sur laquelle l'écrou est vissé. Autrement dit, si les deux créneaux de l'écrou ne sont pas alignés avec le trou de la tige filetée lorsque l'écrou a été serré au couple souhaité, il est impossible de mettre la goupille en place et il faut pour y parvenir faire tourner l'écrou d'un certain angle, ce qui peut dans certains cas conduire à un couple de serrage absolument inacceptable.

Afin de remédier à cet inconvénient, on a proposé un ensemble d'écrou à verrouillage du type précité, permettant l'ajustage de la position des moyens de verrouillage de l'écrou par rapport aux moyens de verrouillage disposés sur la tige filetée, tout en gardant le couple de serrage souhaité (US-A-2 365 433).

Toutefois, dans cet agencement connu, les cannelures externes sont prévues sur un prolongement de l'écrou proprement dit, lequel est pourvu d'un six-pans classique. Par suite, l'écrou est long et relativement lourd, ce qui exclut son utilisation dans certaines applications telles que l'aéronautique.

L'invention a pour but de réduire la longueur et le poids de l'écrou. A cet effet, elle a pour objet, suivant un premier aspect, un ensemble d'écrou à verrouillage du type précité, caractérisé en ce que lesdites cannelures externes constituent les seuls reliefs de transmission de couple de l'écrou.

Des formes de réalisation préférentielles de l'invention sont décrites dans les revendications 2 à 9.

Suivant un second aspect, l'invention a pour objet un ensemble d'écrou à verrouillage, du type comprenant un écrou muni de reliefs de transmission de couple pour son vissage sur une tige filetée présentant des premiers moyens de verrouillage, cet écrou présentant sur sa surface périphérique des cannelures externes à faible pas, et une seconde pièce tubulaire présentant des cannelures internes adaptées pour coopérer avec les cannelures de l'écrou et munie de seconds moyens de verrouillage adaptés pour coopérer avec lesdits premiers moyens de verrouillage pour verrouiller en rotation l'ensemble d'écrou par rapport à la tige filetée, caractérisé en ce que les reliefs de transmission de couple comprennent des encoches frontales de l'écrou.

L'invention sera mieux comprise à l'aide de la description qui va suivre, donnée uniquement à titre d'exemple et faite en se référant aux dessins annexés, sur lesquels :
- la Fig.1 est une vue en perspective d'une première pièce de l'ensemble d'écrou suivant un premier mode de réalisation de l'invention;
- la Fig.2 est une vue en perspective d'une seconde pièce de l'ensemble d'écrou suivant un premier mode de réalisation de l'invention;
- la Fig.3 est une vue dans le plan d'un organe de verrouillage classique;
- la Fig.4 est une vue en coupe longitudinale d'un ensemble d'écrou suivant un premier mode de réalisation de l'invention monté sur une tige filetée pourvue d'un trou transversal et verrouillé à l'aide de l'organe de verrouillage de la Fig.3;
- la Fig.5 est une vue en perspective d'une première pièce de l'ensemble d'écrou suivant un second mode de réalisation de l'invention;
- la Fig.6 est une vue en perspective d'une seconde pièce de l'ensemble d'écrou suivant un second mode de réalisation de l'invention;
- la Fig.7 est une vue en coupe longitudinale d'un ensemble d'écrou suivant un second mode de réalisation de l'invention, monté sur une tige filetée pourvue d'une rainure longitudinale coopérant avec la seconde pièce.

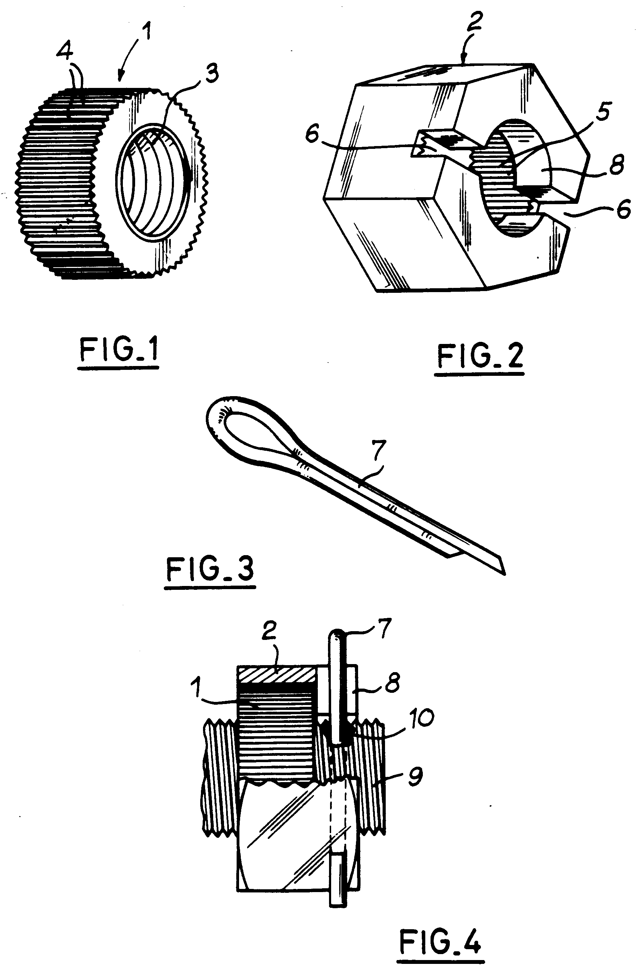

Les Fig.1,2 et 4 montrent un premier mode de réalisation de l'ensemble d'écrou.

La Fig.1 est une vue en perspective d'une première pièce 1 destinées à être assemblée à une seconde pièce 2 illustrée sur la Fig.2.

La première pièce 1 constitue un écrou proprement dit pourvu d'un taraudage 3. L'écrou 1 a une forme cylindrique et peut aussi comporter des moyens formant un frein de filet, par exemple sous la forme d'une gorge extérieure permettant une légère déformation de l'écrou.

L'écrou 1 est sur toute sa surface périphérique pourvue de cannelures externes 4 à faible pas.

La seconde pièce 2 a une forme tubulaire et est sur toute sa paroi intérieure pourvue de cannelures internes 5 complémentaires aux cannelures externes 4 de l'écrou 1 afin de permettre l'assemblage des pièces comme cela est illustré sur la Fig.4.

Les cannelures internes 5 de la seconde pièce 2, constituent avec les cannelures externes 4 de l'écrou 1, un verrouillage positif entre les deux pièces.

La seconde pièce 2 a de préférence, comme dans l'exemple illustré sur les Fig.2 et 4, une périphérie hexagonale permettant son entraînement en rotation à l'aide d'un outil, mais il peut aussi avoir une périphérie cylindrique lisse.

La seconde pièce 2 est sur l'une de ses faces d'extrémité pourvue de deux créneaux 6, diamétralement opposés et destinés à recevoir un organe de verrouillage sous forme d'une goupille 7 illustrée sur les Fig.3 et 4.

Les Fig.2 et 4 montrent que la seconde pièce 2 est en outre pourvue d'une bride 8 dirigée vers l'intérieur. La bride 8 est disposée sur la même face d'extrémité que les créneaux 6 qui divisent la bride en deux moitiés.

La bride 8 définit un orifice circulaire ayant un diamètre permettant le passage d'une tige filetée 9 destinée à venir en prise avec l'écrou 1 (voir Fig. 4).

La Fig.4 montre la première et seconde pièces respectivement 1 et 2 assemblées afin de constituer l'ensemble d'écrou qui est monté sur la tige filetée 9.

Cette tige est pourvue d'un trou radial traversant 10 destiné à recevoir la goupille 7.

L'ensemble d'écrou suivant ce premier mode de réalisation est assemblé de la façon suivante.

La seconde pièce 2 est introduite sur la première pièce formant écrou, les cannelures 5 de la seconde pièce 2 venant en prise avec les cannelures 4 de la première pièce 1. L'ensemble d'écrou ainsi constitué peut ensuite être vissé sur la tige filetée 9 à l'aide par exemple d'une clé coopérant avec au moins deux pans opposés de la surface héxagonale de la seconde pièce 2. L'écrou 1 est entraîné en rotation avec la seconde pièce 2 du fait que les cannelures internes 5 de celle-ci sont en prise avec les cannelures externes 4 de l'écrou.

L'écrou 1 peut naturellement aussi être vissé séparément sur la tige filetée 9 à l'aide d'une clé ayant une forme complémentaire de celle de la surface cannelée de l'écrou.

L'écrou 1 est ainsi serré au couple désiré. Dans le cas ou l'écrou a été vissé par l'intermédiaire de la seconde pièce 2 et les créneaux 6 de celle- ci ne se trouvent pas en regard du trou 10 de la tige filetée 9, il suffit de retirer la seconde pièce, la tourner de l'angle nécessaire pour que les créneaux 6 se trouvent alignés sur le trou 10, et l'introduire de nouveau en prise avec l'écrou.

Dans le cas où l'écrou 1 a été vissé sur la tige filetée directement à l'aide d'une clé on aligne les créneaux 6 de la seconde pièce 2 avec le trou 10, et ensuite on introduit la seconde pièce en prise avec l'écrou.

La dernière opération consiste à mettre la goupille en place de manière qu'elle soit logée dans les créneaux 6 de la seconde pièce 2 en traversant le trou 10 de la tige 9, afin de verrouiller la seconde pièce 2 par rapport à la tige et ainsi verrouiller l'écrou 1 qui se trouve en prise avec la seconde pièce 2.

On peut ensuite déformer les extrémités de la goupille pour la retenir en place.

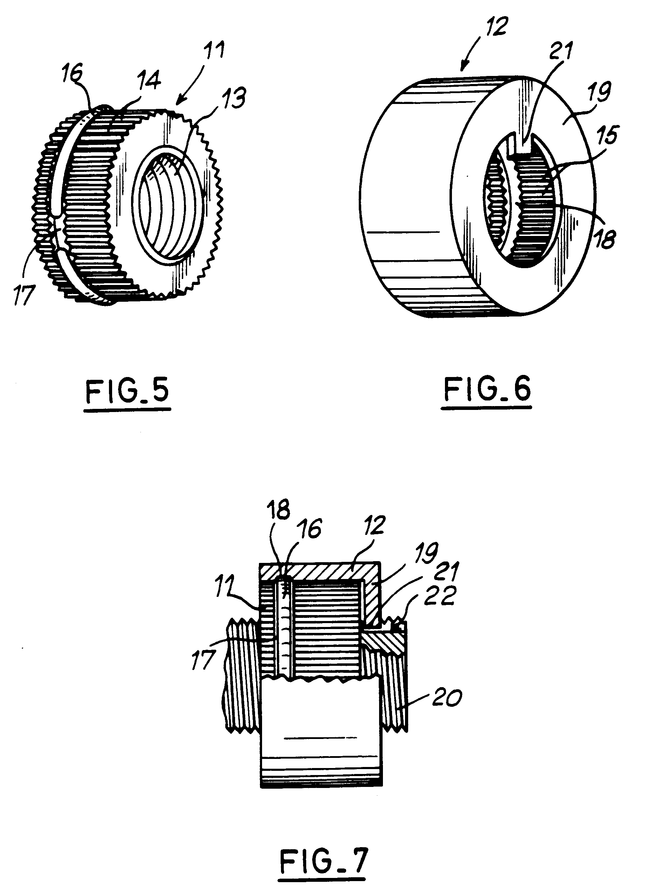

Un second mode de réalisation de l'invention est montré sur les Fig.5 à 7.

La Fig.5 montre une première pièce 11 destinée à être assemblée à une seconde pièce 12 illustrée sur la Fig.6.

La première pièce 11 constitue un écrou proprement dit pourvu d'un taraudage 13. L'écrou 11 a une forme cylindrique et peut aussi comporter des moyens formant un frein de filet, par exemple sous la forme d'une gorge extérieure permettant une légère déformation de l'écrou.

L'écrou 11 est sur toute sa surface périphérique pourvu de cannelures externes 14 à faible pas.

La seconde pièce 12 a une forme tubulaire et est sur sa paroi intérieure pourvue de cannelures internes 15 complémentaires aux cannelures externes 14 de l'écrou 11 afin de permettre l'assemblage des deux pièces comme cela est illustré sur la Fig.7.

Les cannelures internes 15 de la seconde pièce 12 constituent avec les cannelures externes 14 de l'écrou 11, un verrouillage positif entre les deux pièces.

Les première et seconde pièces 11, 12 comportent des moyens de retenue de la seconde pièce 12 sur la première pièce 11.

Ces moyens de retenue sont constitués d'un ressort annulaire 16 logé dans une gorge 17 ménagée sur la surface périphérique de l'écrou 11. Le ressort annulaire 16 est destiné à coopérer par encliquetage avec une gorge 18 ménagée dans la paroi interne de la seconde pièce 12, lors de l'assemblage des première et seconde pièces 11, 12.

La gorge 17 de l'écrou 11 peut par ailleurs aussi constituer les moyens de freinage mentionnés plus haut.

La seconde pièce 12 est sur l'une de ses surfaces d'extrémité pourvue d'une bride 19 dirigée vers l'intérieur.

La bride 19 définit un orifice circulaire ayant un diamètre permettant le passage d'une tige filetée 20 destinée à venir en prise avec l'écrou 11 (voir Fig.7).

La face interne de la bride 19 est destinée à venir à peu près en butée contre l'une des faces d'extrémité de l'écrou 11 lors de l'assemblage des deux pièces 11,12.

La seconde pièce 12 comporte en outre un ergot 21 dirigé vers l'intérieur et faisant saillie à partir de la bride 19 avec laquelle il est avantageusement venu de matière.

Cet ergot 21 est destiné à coopérer avec une rainure longitudinale 22 ménagée sur la tige filetée 20 afin de bloquer angulairement la seconde pièce 12 par rapport à la tige filetée 20, et ainsi verrouiller l'écrou 11 sur celle-ci.

L'ensemble d'écrou suivant ce second mode de réalisation est assemblé de la façon suivante.

La première pièce 11 formant écrou est d'abord vissée sur la tige filetée 20 à l'aide d'une clé polygonale ayant une forme complémentaire de celle de la surface cannelée de l'écrou.

L'écrou 11 est ainsi serré au couple désiré et la seconde pièce 12 est ensuite montée sur la première pièce 11.

Pour monter la seconde pièce 12 sur l'écrou 11, il faut d'abord aligner l'ergot 21 de la seconde pièce sur la rainure 22 de la tige filetée 20 et introduire en même temps les cannelures internes 15 de la seconde pièce 12 en prise avec les cannelures externes 14 de l'écrou 11.

La seconde pièce 12 est ensuite déplacée axialement sur l'écrou 11 jusqu 'à ce que le ressort annulaire 16 de l'écrou 11 vienne s'encliqueter dans la gorge 18 de la seconde pièce 12.

La seconde pièce 12 est ainsi retenue en place par le ressort annulaire 16 et bloquée angulairement par l'ergot 21 pénétrant dans la rainure 22 de la tige filetée 20. L'écrou 11, qui est en prise avec la seconde pièce 12, se trouve ainsi verrouillée sur la tige filetée 20.

En variante, dans chaque mode de réalistion, les cannelures peuvent être interrompues par des gorges circulaires, afin de faciliter leur réalisation par brochage.

De plus, l'écrou peut bien entendu être muni d'un dispositif de freinage supplémentaire approprié, obtenu par exemple par déformation mécanique d'une partie de l'écrou, ou par insertion d'une bague en Nylon ou autre matière.

Par ailleurs, on peut aussi envisager de visser l'écrou au moyen d'encoches ménagées dans la face frontale de l'écrou ou de la seconde pièce 2 ou 12 et d'une clé de serrage correspondante. Ceci permet d'effectuer le vissage de l'écrou au fond d'une cavité qui empêche l'introduction d'une clé s'emboîtant sur la cannelures de l'écrou ou sur le six-pans de ladite seconde pièce, ce sans accroissement de la longueur ni du poids de l'écrou.

## Revendications

1. Ensemble d'écrou à verrouillage, du type comprenant un écrou (1 ; 11) muni de reliefs de transmission de couple pour son vissage sur une tige filetée (9 ; 20) présentant des premiers moyens de verrouillage (10 ; 22), cet écrou présentant sur sa surface périphérique des cannelures externes à faible pas (4 ; 14), et une seconde pièce tubulaire (2 ; 12) présentant des cannelures internes (5 ; 15) adaptées pour coopérer avec les cannelures de l'écrou et munie de seconds moyens de verrouillage (6, 7 ; 21) adaptés pour coopérer avec lesdits premiers moyens de verrouillage pour verrouiller en rotation l'ensemble d'écrou par rapport à la tige filetée, caractérisé en ce que lesdites cannelures externes (4 ; 14) constituent les seuls reliefs de transmission de couple de l'écrou.

2. Ensemble d'écrou suivant la revendication 1, caractérisé en ce que la pièce tubulaire (2 ; 12) comporte des moyens de venue en prise d'un outil de vissage de l'ensemble d'écrou sur la tige filetée, notamment une surface périphérique hexagonale.

3. Ensemble d'écrou suivant la revendication 1 ou 2, caractérisé en ce que les seconds moyens de verrouillage comprennent deux créneaux (6) diamétralement opposés, ménagés sur l'une des faces d'extrémité de la seconde pièce (2), et une goupille (7) destinée à être reçue dans les créneaux et à traverser un trou radial (10) ménagé dans la tige filetée (9) et constituant les premiers moyens de verrouillage afin de verrouiller l'ensemble d'écrou (1, 2) par rapport à la tige (9).

4. Ensemble d'écrou suivant l'une quelconque des revendications 1 à 3, caractérisé en ce que la seconde pièce (2;12) a une surface périphérique cylindrique lisse.

5. Ensemble d'écrou suivant l'une quelconque des revendications précédentes, caractérisé en ce que l'une des faces d'extrémité de la seconde pièce (2;12) comporte une bride (8;19) dirigée vers l'intérieur et portant les seconds moyens de verrouillage (6;21), cette bride (8 ; 19) définissant un orifice circulaire dont le diamètre permet le passage de la tige filetée (9 ; 20).

6. Ensemble d'écrou suivant l'une quelconque des revendications 1, 2, 4 et 5, caractérisé en ce que les seconds moyens de verrouillage sont constitués d'un ergot (21) prévu sur l'une des faces d'extrémité de la seconde pièce (12) de manière à s'étendre radialement vers l'intérieur de celle-ci, l'ergot (21) étant destiné à coopérer avec une rainure longitudinale (22) ménagée dans la tige filetée (20) et constituant les premiers moyens de verrouillage afin de verrouiller l'ensemble d'écrou (11,12) par rapport à la tige (20).

7. Ensemble d'écrou suivant l'une quelconque des revendications 1 à 6, caractérisé en ce qu'il comporte des moyens de retenue (16,17,18) de la seconde pièce (12) sur l'écrou (11), formés par un ressort annulaire (16) logé dans une gorge (17) ménagée dans la surface périphérique de l'écrou (11), le ressort annulaire (16) étant destiné à coopérer par encliquetage avec une gorge (18) ménagée dans la paroi intérieure de la seconde pièce (12), lors de l'assemblage de l'ensemble d'écrou.

8. Ensemble d'écrou suivant l'une quelconque des revendications 1 à 7, caractérisé en ce que lesdites cannelures externes (4 ; 14) s'étendent sur l'es sentiel de la longueur de l'écrou.

9. Ensemble d'écrou suivant l'une quelconque des revendications 1 à 8, caractérisé en ce que les cannelures sont interrompues par des gorges circulaires.

10. Ensemble d'écrou à verrouillage, du type comprenant un écrou (1 ; 11) muni de reliefs de transmission de couple pour son vissage sur une tige filetée (9 ; 20) présentant des premiers moyens de verrouillage (10 ; 22), cet écrou présentant sur sa surface périphérique des cannelures externes à faible pas (4 ; 14), et une seconde pièce tubulaire (2 ; 12) présentant des cannelures internes (5 ; 16) adaptées pour coopérer avec les cannelures de l'écrou et munie de seconds moyens de verrouillage (6, 7 ; 21) adaptés pour coopérer avec lesdits premiers moyens de verrouillage pour verrouiller en rotation l'ensemble d'écrou par rapport à la tige filetée, caractérisé en ce que les reliefs de transmission de couple comprennent des encoches frontales de l'écrou.

## Patentansprüche

1. Verriegelungsmutteranordnung des Typs mit einer Mutter (1; 11), die mit Drehmomentübertragungsvorsprüngen für ihr Aufschrauben auf eine Gewindestange (9; 20) versehen ist, welche eine erste Verriegelungseinrichtung (10; 22) aufweist, wobei die Mutter auf ihrer Umfangsfläche äußere Rillen (4; 14) mit geringem gegenseitigem Abstand aufweist, und mit einem zweiten, rohrförmigen Teil (2; 12), das mit inneren Rillen (5; 15), die zum Zusammenwirken mit den Rillen der Mutter ausgebildet sind, und mit einer zweiten Verriegelungseinrichtung (6, 7; 21) versehen ist, die zum Zusammenwirken mit der ersten Verriegelungseinrichtung ausgebildet ist, um die Mutteranordnung in bezug auf die Gewindestange drehfest zu verriegeln, dadurch gekennzeichnet, daß die äußeren Rillen (4; 14) die einzigen Drehmomentübertragungsvorsprünge der Mutter bilden.

2. Mutteranordnung nach Anspruch 1, dadurch gekennzeichnet, daß das rohrförmige Teil (2; 12) Angriffseinrichtungen für ein Werkzeug zum Schrauben der Mutteranordnung auf die Gewindestange, insbesondere eine hexagonale Umfangsfläche, aufweist.

3. Mutteranordnung nach Anspruch 1 oder 2, dadurch gekennzeichnet, daß die zweite Verriegelungseinrichtung zwei diametral gegenüberliegende Ausnehmungen (6), die in einer der Endflächen des zweiten Teils (2) ausgebildet sind, und einen Stift (7) aufweist, der zur Aufnahme in den Ausnehmungen und zum Durchgehen durch ein radiales Loch (10) bestimmt ist, das in der Gewindestange (9) ausgebildet ist und die erste Verriegelungseinrichtung zum Verriegeln der Mutteranordnung (1, 2) in bezug auf die Stange (9) bildet.

4. Mutteranordnung nach einem der Ansprüche 1 bis 3, dadurch gekennzeichnet, daß das zweite Teil (2; 12) eine glatte zylindrische Umfangsfläche aufweist.

5. Mutteranordnung nach einem der vorhergehenden Ansprüche, dadurch gekennzeichnet, daß eine der Endflächen des zweiten Teils (2; 12) einen einwärts gerichteten Flansch (8; 19) aufweist, der die zweite Verriegelungseinrichtung (6; 21) trägt, wobei der Flansch (8; 19) eine kreisförmige Öffnung bildet, deren Durchmesser das Hindurchgehen der Gewindestange (9; 20) ermöglicht.

6. Mutteranordnung nach einem der Ansprüche 1, 2, 4 und 5, dadurch gekennzeichnet, daß die zweite Verriegelungseinrichtung aus einem Vorsprung (21) besteht, der derart an einer der Endflächen des zweiten Teils (12) vorgesehen ist, daß er sich radial in dieses hinein erstreckt, wobei der Vorsprung (21) zum Zusammenwirken mit einer Längsnut (22), die in der Gewindestange (20) ausgebildet ist, bestimmt ist und die erste Verriegelungseinrichtung zum Verriegeln der Mutteranordnung (11, 12) in bezug auf die Stange (20) bildet.

7. Mutteranordnung nach einem der Ansprüche 1 bis 6, dadurch gekennzeichnet, daß sie Einrichtungen ( 16, 17, 18) zum Zurückhalten des zweiten Teils (12) auf der Mutter ( 11 ) aufweist, die durch eine ringförmige Feder (16) gebildet sind, die in einer in der Umfangsfläche der Mutter (11) ausgebildeten Nut (17) angeordnet ist, wobei die ringförmige Feder (16) dazu bestimmt ist, beim Zusammensetzen der Mutteranordnung einrastend mit einer in der Innenwand des zweiten Teils (12) ausgebildeten Nut (18) zusammenzuwirken.

8. Mutteranordnung nach einem der Ansprüche 1 bis 7, dadurch gekennzeichnet, daß die äußeren Rillen (4; 14) sich über den wesentlichen Teil der Länge der Mutter erstrecken.

9. Mutteranordnung nach einem der Ansprüche 1 bis 8, dadurch gekennzeichnet, daß die Rillen durch kreisförmige Nuten unterbrochen sind.

10. Verriegelungsmutteranordnung des Typs mit einer Mutter (1; 11), die mit Drehmomentübertragungsvorsprüngen für ihr Aufschrauben auf eine Gewindestange (9; 20) versehen ist, welche eine erste Verriegelungseinrichtung (10; 22) aufweist, wobei die Mutter auf ihrer Umfangsfläche äußere Rillen (4; 14) mit geringem gegenseitigem Abstand aufweist, und mit einem zweiten, rohrförmigen Teil (2; 12), das mit inneren Rillen (5; 15), die zum Zusammenwirken mit den Rillen der Mutter ausgebildet sind, und mit einer zweiten Verriegelungseinrichtung (6, 7; 21) versehen ist, die zum Zusammenwirken mit der ersten Verriegelungseinrichtung ausgebildet ist, um die Mutteranordnung in bezug auf die Gewindestange drehfest zu verriegeln, dadurch gekennzeichnet, daß die Drehmomentübertragungsvorsprünge Einkerbungen an der Frontseite der Mutter umfassen.

## Claims

1. A lock nut assembly of the type comprising a nut (1; 11) provided with torque transmission reliefs for screwing it on to a threaded rod (9; 20) having first locking means (10; 22), this nut having fluting (4; 14) of small pitch on its peripheral surface, and a second, tubular part (2; 12) having internal fluting (5; 15) adapted to cooperate with the fluting of the nut and being provided with second locking means (6, 7; 21) adapted to cooperate with the said first locking means to lock the nut assembly against rotation relative to the threaded rod, characterized in that the said external fluting (4; 14) constitutes the sole torque transmission reliefs of the nut.

2. A nut assembly according to claim 1, characterized in that the tubular part (2; 12) comprises means for engagement by a wrench for screwing the nut assembly on to the threaded rod, in particular a hexagonal peripheral surface.

3. A nut assembly according to claim 1 or 2, characterized in that in the second locking means comprise two diametrically opposed slots (6) formed on one of the end faces of the second part (2), and a pin (7) adapted to be received in the slots and to pass through a radial hole (10) which is formed in the threaded rod (9) and constitutes the first locking means, in order to lock the nut assembly (1, 2) relative to the rod (9).

4. A nut assembly according to any of claims 1 to 3, characterized in that the second part (2; 12) has a smooth cylindrical peripheral surface.

5. A nut assembly according to any of the preceding claims, characterized in that one of the end faces of the second part (2; 12) comprises an inwardly directed flange (8; 19) with the second locking means (6; 21), this flange (8, 19) defining a circular aperture whose diameter allow passage of the threaded rod (9; 20).

6. A nut assembly according to any of claims 1, 2, 4 and 5, characterized in that the second locking means are formed by a lug (21) provided on one of the end faces of the second part (12) so as to extend radially inwards thereof, the lug (21) being adapted to cooperate with a longitudinal groove (22) which is formed in the threaded rod (20) and constitutes the first locking means, in order to lock the nut assembly (11, 12) relative to the rod (20).

7. A nut assembly according to any of claims 1 to 6, characterized in that it comprises retaining means (16, 17, 18) for retaining the second part (12) on the nut (11), formed by an annular spring (16) fitted in a groove (17) formed in the peripheral surface of the nut (11), the annular spring (16) being adapted to cooperate by snap action with a groove (18) formed in the internal wall of the second part (12) during the assembly of the nut assembly.

8. A nut assembly according to any of claims 1 to 7, characterized in that the said external fluting (4; 14) extends over substantially the whole length of the nut.

9. A nut assembly according to any of claims 1 to 8, characterized in that the flutings are interrupted by circular grooves.

10. A lock nut assembly of the type comprising a nut (1; 11) provided with torque transmission reliefs for screwing it on to a threaded rod (9; 20) having first locking means (10; 22), this nut having fluting (4; 14) of small pitch on its peripheral surface, and a second, tubular part (2; 12) having internal fluting (5; 15) adapted to cooperate with the fluting of the nut and being provided with second locking means (6, 7; 21) adapted to cooperate with the said first locking means to lock the nut assembly against rotation relative to the threaded rod, characterized in that the torque transmission reliefs comprise frontal notches in the nut.
